# EUROPEAN PATENT SPECIFICATION

(11) **EP 0 463 563 B1**
(45) Date of publication and mention of the grant of the patent: **07.09.1994**
(21) Application number: 91110094.9
(22) Date of filing: 19.06.1991
(51) Int. Cl.: B60R 1/06

(54) **Electrical remote-control mirror assembly**
Elektrisch fernbedienbarer Rückspiegel
Rétroviseur à commande à distance électrique

(30) Priority: 19.06.1990 JP 158617/90
(43) Date of publication of application: 02.01.1992
(73) Proprietor: ICHIKOH INDUSTRIES LIMITED, Shinagawa-ku Tokyo 141 (JP)
(72) Inventor: Nagayama, Yoshirou, Isehara-Shi, Kanagawa, 259-11 (JP); Sekino, Takao, Hiratsuka-Shi, Kanagawa, 254 (JP)
(74) Representative: Grünecker, Kinkeldey, Stockmair & Schwanhäusser Anwaltssozietät

(56) References cited:
- DE-A- 3 015 528
- US-A- 4 632 525

## Description

### BACKGROUND OF THE INVENTION

### Field of the Invention:

The present invention relates to a remote-controlled rearview mirror assembly such as automobile door mirror assembly, of which the mirror is supported tiltably relative to the housing thereof, and more particularly, to an improved and novel electrical remote-control mirror assembly, of which the mirror can be tilted down speedily and easily at any time for viewing the rear wheel and its vicinity of the car. Prior Art Statement:

An electrical remote-control automobile mirror assembly according to the preamble of claim 1 is disclosed in, US-A-4 555 166, of which the mirror is supported tiltably relative to the housing thereof and can be turned vertically and horizontally by means of remote-controlled motors.

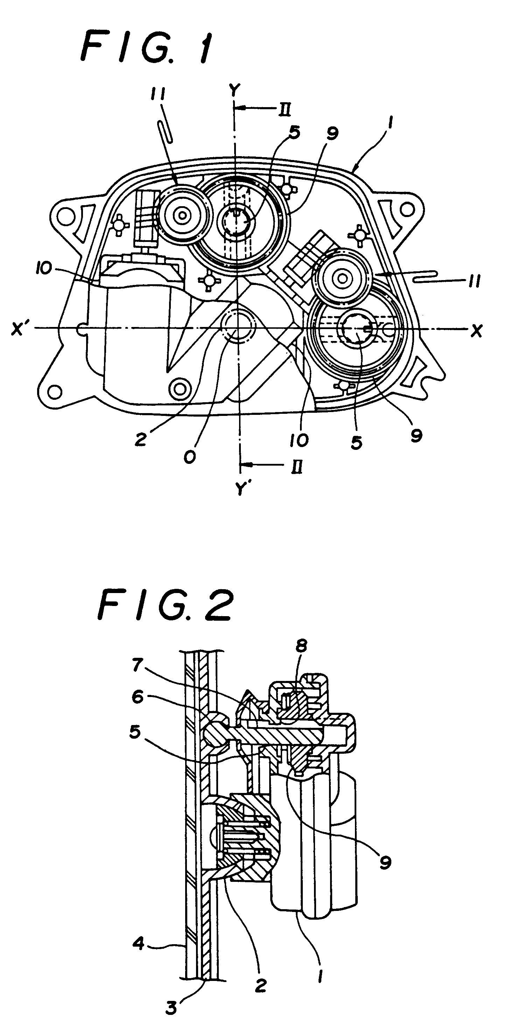

Figs. 1 and 2 show an example of the well-known electrical remote-control mirror assembly of this type.

Fig. 1 is a front view showing the drive unit from which the mirror body is removed, the casing 1 of the drive unit being partially cut off. Fig. 2 is a sectional view taken along the line II-II, showing the drive unit on which the mirror body is attached.

Two axes X-X' and Y-X' perpendicular to each other are set as shown in Fig. 1. There is provided at the intersection O of these axes a ball-and-socket joint 2 by which the mirror body 3 is tiltably supported as shown in Fig. 2. The reference numeral 4 indicates a mirror proper.

As shown in Fig. 1, plungers 5 are provided on the axes X-X' and Y-Y', respectively. The plunger 5 has provided at the end thereof a ball-and-socket joint 6 coupled to the mirror body 3, which will be seen from Fig. 2. The plunger 5 has formed axially therein a recess 7 in which a projection 8 provided on the drive casing 1 is engaged against axial pivoting of the plunger 5, and it has fitted thereon a receiving gear 9 at the last speed reduction step. The receiving gear 9 is rotated by a motor 10 by means of a speed reduction gear group 11.

As described above, the plunger 5 is blocked against axial pivoting and has formed on the outer circumference thereof a thread which is in mesh with the receiving gear 9. Thus, as the receiving gear 9 is rotated, the plunger 5 is axially driven to tilt the mirror body 3.

The adjusting range of the angular position of the mirror 4 tilted by the above-mentioned drive unit (see Figs. 1 and 2) is so set as to cover the necessary range for an ordinary driving of the car on the road. Also, the tilt speed of the mirror body 3 is limited to such an extent that it can be adjusted with an accuracy required in practice. This is because if the mirror body is tilted too quickly, it is rather difficult to adjust the tilt angle to a desired one.

However, in any special driving of the car, for example, when moving the car backward in the vicinity of a road edge or in the direction of its width, it is desired to have a vision of the rear wheel and its vicinity, of which the image comes as reflected by the door mirror (this vision will be referred to as "reflected image" hereinafter).

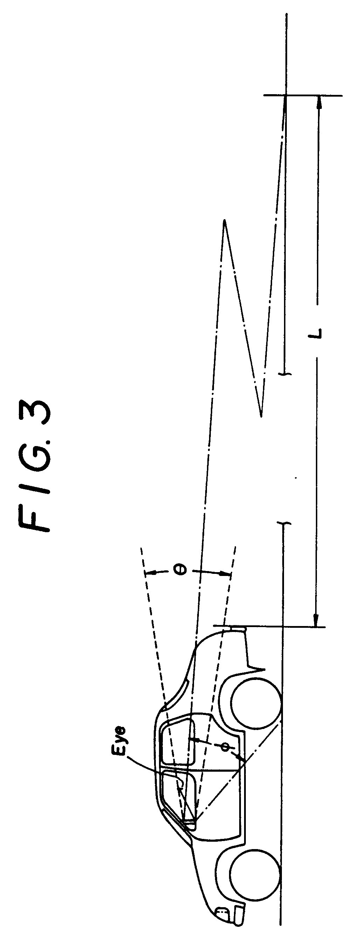

Fig. 3 is an explanatory drawing showing the viewing, by means of a door mirror, of the rear wheel and its vicinity.

The point "Eye" in Fig. 3 is the position of the driver's eyes. In the ordinary driving of a car, the door mirror posture (theoretically a door mirror angle relative to the road surface, or practically a door mirror angle relative to the car body; this will be referred to as "mirror angle" hereinafter) is so adjusted as to view the reflected image within the angular range ϑ in Fig. 3 for the purpose of knowing the position of a car behind or the like.

When moving the car backward in the vicinity of a road edge, the reflected image within the angle φ in Fig. 3 can desirably viewed by tilting down the mirror body. To this end, it is required that the rear wheel should be within the angular range φ and that the road surface over the distance L necessary for knowing the position of the car behind should also be within this angular range φ.

For the driver to view the reflected image of the rear wheel and its vicinity, the door mirror should be tilted down through a predetermined angle from the mirror angle set for the ordinary driving of the car. Varying from one car model to another, the predetermined angle ranges from 5° to 7°. Concerning a certain car model, the predetermined angle is generally constant irrespective of the driver's sitting height.

Indeed in the conventional remotely controllable door mirror, the range of the mirror tilt by the drive unit can be increased so that the driver can get a vision of the rear wheel and its vicinity, but the following inconvenience remains in such case:
(a) If the adjusting range of the mirror angle is increased with the mirror tilt speed not changed, the time taken for the mirror operation is longer;
(b) If the mirror tilt speed is increased correspondingly to the increase of the adjusting range of the mirror angle, no accurate operation can be ensured in remote control of the mirror angle for the ordinary car driving; or
(c) Further in any of the above two cases, when a state in which the mirror angle is so set that the reflected image within the angular range ϑ shown in Fig. 3 can be viewed (which state will be referred to as "ordinary drive" hereinafter) has been followed by a state in which the mirror angle is so set that the reflected image within the angular range φ shown in Fig. 3 can be viewed (which state will be referred to as "rear-wheel check" hereinafter) and if the ordinary drive is restored thereafter, the mirror angle set for the ordinary drive is missing, thus causing an inconvenience because a readjustment of the mirror angle is required for the ordinary drive.

The present invention has an object to overcome the above-mentioned drawbacks of the convention techniques by providing an electrical remote-control mirror assembly, which permits a quick and easy changeover between the ordinary drive and rear-wheel check mirror angles without any influence on the operating accuracy of the remote control and comprises a memory for storage of an mirror angle adjusted for the ordinary drive and which ensures an accurate restoration of the initial ordinary drive when the remote control is operated for switching the mirror angle for the rear-wheel check to that for the ordinary drive.

### SUMMARY OF THE INVENTION

To this end, a remote-controlled rearview mirror assembly in accordance with the present invention is characterized by the features specified in the characterizing part of claim 1.

In this structure of the mirror assembly, when the plunger is rotated by rotating the drive cylinder, the plunger is moved because the internal thread thereof is in mesh with the external thread of the drive shaft, and thus the plunger is moved forwardly and reversely. Thus, the mirror assembly performs its conventional remote control function.

When the rack-cylinder is moved forwardly and reversely independently of the drive shaft, the plunger is moved forwardly and reversely. Thus, in addition to the ordinary remote control function, the mirror assembly has a function to temporarily tilt down the mirror to rear-wheel check position and also a function to restore the ordinary drive position. These operations can be done independently of the drive cylinder. Since the drive cylinder is not rotated, an accurate restoration to the initial position can be ensured with no influence on the support angle of the mirror in the ordinary drive position.

Irrespectively of the adjustment of the support angle of the mirror for the ordinary drive, the mirror titled down abuts the stopper as the plunger is moved forwardly by means of the drive shaft and thus the tilting is stopped, the force transmission is interrupted due to the aforementioned slip. Thus, the drive mechanism is prevented from being damaged.

### BRIEF DESCRIPTION OF THE DRAWINGS

Fig. 1 is a front view of a conventional electrically operated remotely-controllable type mirror assembly with the drive unit shown partially cut off;
Fig. 2 is a partially fragmentary, side-elevational sectional view, taken along the line II-II, of the mirror assembly in Fig. 1, showing the fixation of the mirror and mirror body to the drive unit;
Fig. 3 is an explanatory drawing showing the relation between the mirror angle and reflected image;
Figs. 4 to 11 show one embodiment of the electrical remote-control mirror assembly according to the present invention; of which

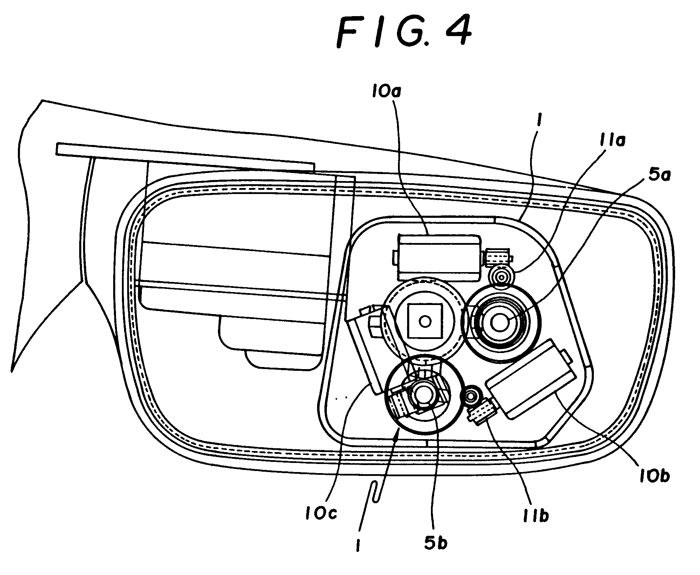

Fig. 4 is a front view of the mirror assembly according to the present invention with the mirror body and drive casing cover removed;

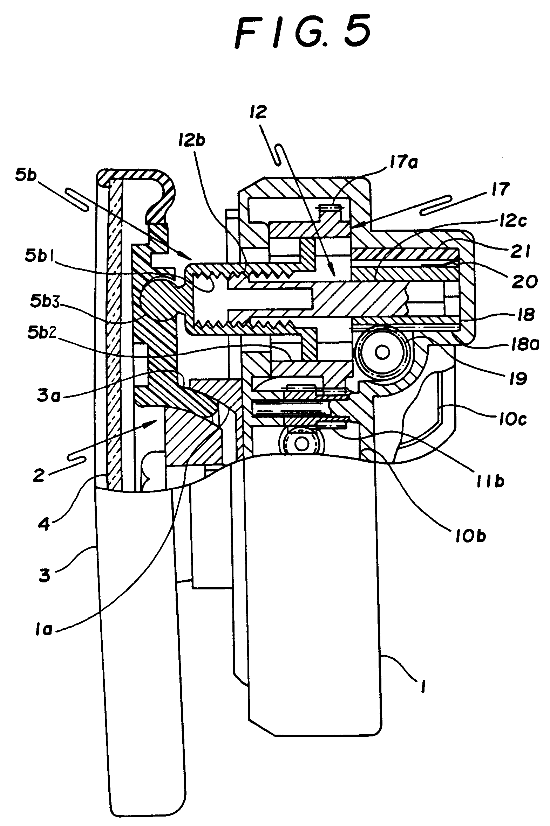

Fig. 5 is a partially fragmentary, side-elevational sectional view of the mirror assembly in Fig. 4;

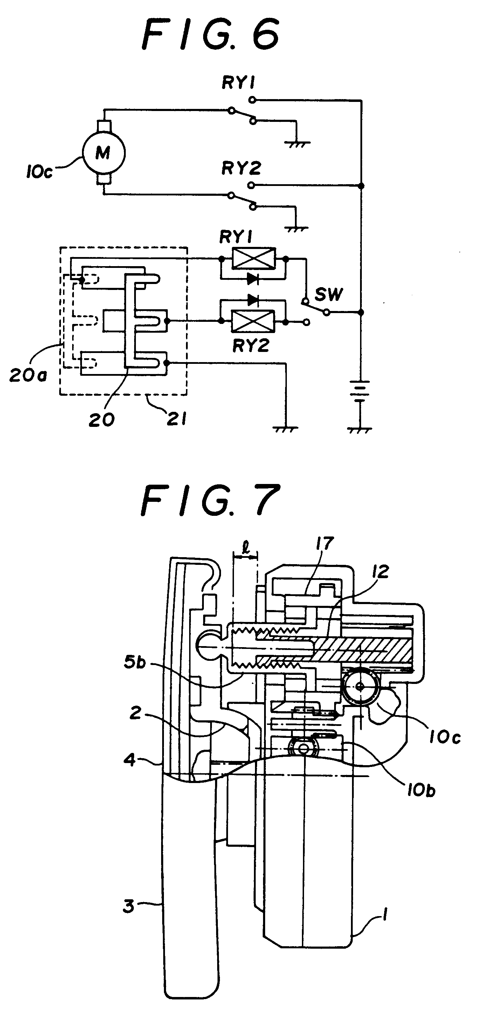

Fig. 6 is an explanatory drawing of the electrical controller of the mirror assembly according to the present invention; and
Figs. 7 to 10 are explanatory drawings, respectively, showing the angular positions of the mirror body tilted by the electrically operated remotely-controllable drive unit.

### DETAILED DESCRIPTION OF THE PREFERRED EMBODIMENTS

Fig. 5 shows the drive unit in one embodiment of the mirror assembly according to the present invention. Fig. 5 provides a view corresponding to that in Fig. 1 showing the conventional mirror assembly.

The drive unit has a casing 1 in which a plunger 5a for turning the mirror horizontally and a plunger 5b for turning the mirror vertically are provided and driven by motors 10a and 10b, respectively, by means of reduction gear groups 11a and 11b, respectively.

The mechanism composed of the plunger 5a, motor 10a, reduction gear group 11a, etc. and intended for turning the mirror horizontally is similar to that in the previously mentioned conventional mirror assembly, but the mechanism composed of the plunger 5b, motor 10b and reduction gear group 11b and so forth and intended for turning the mirror vertically comprises a mirror tilting mechanism I intended for rear-wheel check, which will be discussed below with reference to Fig. 5.

Fig. 5 is a schematic sectional view taken along the line passing near the above-mentioned mirror tilting mechanism for rear-wheel check.

The upper portion of Fig. 5 corresponds to the upper portion of the mirror assembly.

The drive casing 1 supports a mirror body 3 tiltably by means of a ball-and-socket joint 2.

The reference numeral 4 indicates a mirror which is secured and supported to the mirror body 3.

The above-mentioned ball-and-socket joint 2 consists of a spherical concave seat 1a formed on the drive casing 1 and a spherical portion 3a formed integrally with the mirror body 3.

As the mirror body 3 is pivoted further counterclockwise (downward) from the position illustrated in Fig. 5, the front end (not shown) of the spherical portion 3a abuts the bottom of the spherical concave seat 1a and acts as stopper.

The reference numeral 5b is a tubular plunger having an internal thread 5b1 formed on the inner wall thereof and also a ball 5b3 formed at the end thereof as a part of a ball-and-socket joint 2.

The reference numeral 12 indicates a drive shaft screwed in the above-mentioned plunger 5b to move the latter forwardly and reversely and having extended therefrom and formed integrally therewith a leaf spring-shaped external thread members 12b which are in mesh with the above-mentioned internal thread 5b1.

The reference numeral 17 indicates a drive cylinder supported pivotably relative to the drive casing 1 and which rotates the plunger 5b.

The plunger 5b is so fitted in the drive cylinder 17 as to be blocked against pivoting about the axis while being axially slidable.

The drive cylinder 17 is toothed at 17a on the outer circumference thereof, and rotated forwardly and reversely by the motor 10b by means of the reduction gear group 11b.

The forward or reverse rotation is transmitted to the plunger 5b which will thus be moved forwardly or reversely.

On the other hand, the drive shaft 12 has a square rear end portion 12c (shown at the right of the illustration) which is so fitted in a square tube-shaped rack-cylinder 18 as to be blocked against pivoting, but slidably, relative to the rack-cylinder 18.

The rack-cylinder 18 has a rack 18a formed on the outer circumference thereof, and it is moved forwardly and reversely (to the left and right in the illustration) as driven by the motor 10c by means of a pinion 19.

Such an appropriate sliding friction is given between the above-mentioned rack-cylinder 18 and drive shaft 12, for example, one of them is made of a rigid silicon rubber or a silicon rubber sheet is attached on the surface of the square portion, that a force sufficient for tilting or holding the mirror body 3 is transmitted between them and that when an excessive force is applied to the plunger 5b, the drive shaft 12 slips in the rack-cylinder 18.

The above-mentioned rack-cylinder 18 has attached thereon a sliding electrode 20 which slides in contact with a printed circuit board 21.

Fig. 6 is an explanatory drawing of the electrical connection of the electrical controller. The sliding electrode 20 is normally at the position depicted with a solid line. When the sliding electrode 20 stays at this position, the motor 10c is permitted by relays to run forwardly (for down-tilt of the mirror body 3).

When the mirror body 3 is directed downward, the sliding electrode 20 takes the position 20a (indicated with a dash line), thus blocking the motor 10c from running forward while permitting it to run reversely.

When the motor 10c runs as in the above, the mirror body 3 is turned vertically.

When the motor 10b runs, the drive cylinder 17 is rotated by means of the reduction gear group 11b and thus the plunger 5b is rotated. The plunger 5b is moved forwardly and reversely due to the engagement between the external thread 12b and internal thread 5b1, thereby turning the mirror body 3 vertically.

As mentioned above, the mirror body 3 can be tilted by the motor 10b and motor 10c independently of each other.

In this embodiment, the speed of the motor 10c is about 1.56 times higher that of the motor 10b.

Further, the reduction ratio of the reduction gear group 11b is about 2.3 times larger than that of the reduction gear group 11a including the pinion 19.

Consequently, the mirror body 3 is tilted at a rate of 3.3 sec/10 deg. by the motor 10b, while it is tilted at a rate of 0.5 sec/10 deg. by the motor 10c. Namely, the mirror body 3 is tilted very quickly by the motor 10c.

Figs. 7 to 10 are explanatory drawings, respectively, of this embodiment, in which, however, the sectional planes of other members than the plunger 5 are shown as not hatched for the simplicity of illustration.

Fig. 7 shows the remotely controllable mirror assembly shown in Fig. 5 (embodiment) set for the ordinary drive.

The operator uses the remote control to run the motor 10c for a desired magnitude of the dimension ℓ shown in Fig. 7 depending upon his sitting height or for any other reason to adjust the support angle of the mirror 4 as necessary.

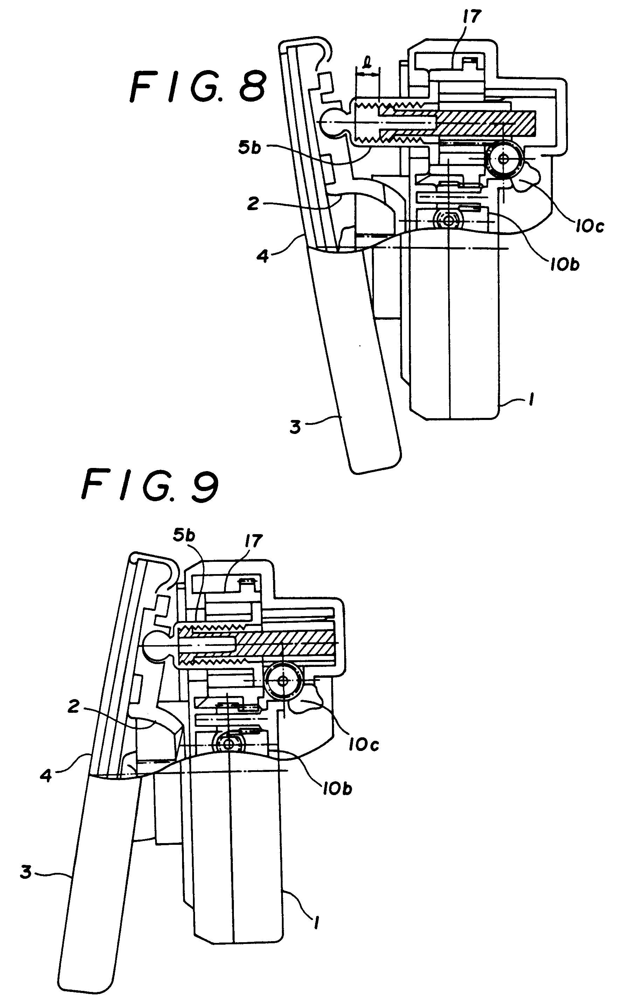

When the motor 10c runs from the position shown in Fig. 7 to move the plunger 5b forwardly, the position shown in Fig. 8 is attained in which the ball-and-socket joint 2 is fully rotated and acts as stopper, thus stopping the mirror turn. In this state, the dimension ℓ in Fig. 8 remains unchanged from that shown in Fig. 7.

Thus, the mirror 4 is tilted down and reaches the rear-wheel check position.

When the motor 10c runs again to retreat the plunger 5b, the mirror body 3 is tilted and reaches the position in Fig. 7 while the dimension ℓ remains unchanged. Thus, the mirror body 3 is completely returned to the initial position.

As having been described in the foregoing, changeover can be made between the ordinary drive and rear-wheel check positions through the remote control of the motor 10c while the dimension ℓ (upon which the angular position of the mirror body 3 in the ordinary drive depends) having been adjusted in accordance with the conditions of each driver; the support angle of the mirror in the ordinary drive before the mirror body takes the rear-wheel check position can be accurately restored (while the dimension ℓ remains unchanged); and the changeover operation is done as driven by the motor 10c and so it can be done quickly at an angular velocity 6 times higher than in the adjustment of the supported angle of mirror by the motor 10b.

Therefore, no fine control such as intermediate stopping of the tilting stroke is required and the mirror body can be stopped with a high accuracy even with the quick changeover operation.

Further, as shown in Fig. 5, the screwing mechanism driven by the motor 10b, screwing mechanism driven by the motor 10c, the drive cylinder 17, drive shaft 12 and plunger 5b form together a three-walled telescopic structure which leads to the possibility of a compact design.

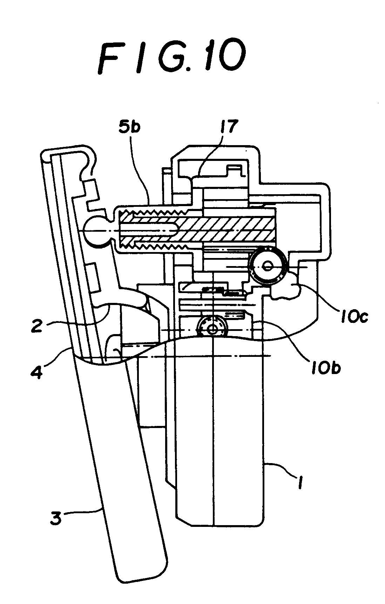

Fig. 9 is an explanatory drawing showing the mirror body 3 tilted upward through a large angle for the ordinary drive. As seen, the mirror body 3 is tilted up to the extreme position (full stroke) and the dimension ℓ in Figs. 7 and 8 is zero.

Even when the motor 10c runs from this position, the mirror body 3 is tilted down to the pivoting limit of the ball-and-socket joint 2 as shown in Fig. 10.

The rear-wheel check position shown in Fig. 8 differs in the memorized dimension ℓ for the ordinary drive from that shown in Fig. 7, while the angular position of the mirror body remains the same (at the pivoting limit of the ball-and-socket joint 2).

Fig. 5 is a vertical sectional view showing the first embodiment of the present invention, and Figs. 7 to 10 are schematic vertical sectional views, respectively, for explanation of the mirror positioning operations. A variant of the first embodiment can be derived from these Figures (Figs. 7 to 10) which can be regarded as horizontal sectional views, respectively. According to such variant, the mirror can be temporarily turned horizontally and returned to the original position. The door mirror according to this variant is very useful for a wider horizontal field of vision when the car runs through a joint of highways.

## Claims

1. An electrically remote-controlled type mirror assembly comprising:
a mirror (4);
a mirror body (3) supporting said mirror;
a casing (1) having a ball-and-socket joint which supports said mirror body pivotably; and
a pair of plungers (5a,5b) coupled with said mirror body and so disposed within said casing as to be moved forward and backward by a pair of motors (10a,10b), respectively, by means of reduction gear trains (11a,11b), respectively, to tilt said mirror body horizontally and vertically within a certain pivoting angles,
**characterised in that**
at least one of said plungers is formed like a tube and having a female thread (5b1) formed on the inner circumference thereof,
at least one drive cylinder (17) is disposed concentrically with one of said plungers and adapted to be blocked against pivoting but slidable relative to said one of said plungers, and adapted to be rotated by one of said pair of motors by means of one of said reduction gear trains, at least one drive shaft (12) is disposed concentrically with said one of said plungers and having a male thread (12b) formed thereon which is in mesh with the female thread of said one of said plungers,
at least one rack-cylinder (18) is disposed concentrically with said one of said plungers and having a rack (18a) formed on an outer surface thereof, and adapted to be blocked against pivoting relative to said one of said drive shaft and given an axial friction against axial sliding,
another reduction gear train (18a, 19) is provided including a pinion (19) which is in mesh with said rack, and
at least one other motor (10c) which drives said another reduction gear train is provided, whereby it is possible to slide said drive shaft axially by means of said other motor to quickly tilt said mirror body beyond one of said certain pivoting angles in order to check a rear wheel of a car.

2. An electrically remote-controlled type mirror assembly as set forth in claim 1, wherein said one of said drive shaft and said one of said rack-cylinder are coupled to each other by means of a friction clutch.

3. An electrically remote-controlled type mirror assembly as set forth in claim 1, further comprising a means (21) for controlling the running of said other motor, said controlling means being adapted to tilt said mirror between a predetermined angle within one of said certain pivoting angles and a maximum angle beyond said one of said certain pivoting angles.

4. An electrically remote-controlled type mirror assembly as set forth in claim 3, wherein controlling means includes a control circuit (21) responsive to the sliding distance of said drive shaft to stop said other motor from running.

5. An electrically remote-controlled type mirror assembly as set forth in claim 1, wherein said one of said plungers (56) tilts said mirror body vertically.

## Patentansprüche

1. Elektrisch fernbedienbarer Rückspiegel, beinhaltend:
einen Spiegel (4);
einen Spiegelkörper (3), welcher diesen Spiegel abstützt;
ein Gehäuse (1), welches eine Kugelgelenkverbindung aufweist, welches diesen Spiegelkörper schwenkbar abstützt; und
ein Paar von Kolben (5a,5b), welche mit diesem Spiegelkörper verbunden und so in dem Gehäuse angeordnet sind, daß sie durch ein Paar von Motoren (10a,10b) jeweils vorwärts und rückwärts bewegbar sind, und zwar jeweils mit Untersetzungsgetrieben (11a,11b), um diesen Spiegelkörper horizontal und vertikal innerhalb bestimmter Schwenkwinkel zu schwenken,
**dadurch gekennzeichnet,**
daß zumindest einer dieser Kolben rohrförmig ausgebildet ist und ein weibliches Gewinde (5b1) aufweist, das an dem inneren Umfang ausgebildet ist,
daß zumindest ein Antriebszylinder (17) vorgesehen ist, der konzentrisch mit einem dieser Kolben angeordnet ist, und der gegen eine Schwenkbewegung blockiert ist, aber gleitend in bezug auf einen dieser Kolben beweglich ist, und welcher dafür vorgesehen ist, von einem von diesem Paar von Motoren mittels eines dieser Untersetzungsgetriebe rotiert zu werden,
daß zumindest eine Antriebswelle (12) vorgesehen ist, welche konzentrisch mit einem dieser Kolben angeordnet ist, und welche ein männliches Gewinde (12b) aufweist, das darauf angeordnet ist, und welches im Eingriff mit diesem weiblichen Gewinde von einem dieser Kolben steht,
daß zumindest ein Zahnstangen-Zylinder (18) vorgesehen ist, welcher konzentrisch mit einem dieser Kolben angeordnet ist, und welcher eine Zahnstange (18a) aufweist, die an einer äußeren Fläche des Kolbens ausgebildet ist, und welcher dafür geeignet ist, gegen eine Schwenkbewegung relativ zu einem dieser Antriebswellen blockiert zu sein, und welcher eine axiale Reibung gegen axiales Gleiten ergibt,
daß ein weiteres Untersetzungsgetriebe (18a,19) vorgesehen ist, welches ein Ritzel (19) aufweist, das im Eingriff mit dieser Zahnstange steht, und
daß zumindest ein weiterer Motor (10c) vorgesehen ist, welcher dieses andere Untersetzungsgetriebe antreibt, wodurch es möglich ist, diese Antriebswelle axial durch diesen anderen Motor zu verschieben, um diesen Spiegelkörper schnell über einen dieser bestimmten Schwenkwinkel hinaus zu schwenken, um ein Hinterrad des Fahrzeuges zu überprüfen.

2. Elektrisch fernbedienbarer Rückspiegel gemäß Anspruch 1, wobei diese Antriebswelle und dieser Zahnstangen-Zylinder miteinander durch eine Reibungskupplung verbunden sind.

3. Elektrisch fernbedienbarer Rückspiegel gemäß Anspruch 1, welcher weiterhin ein Mittel (21) aufweist, um den Betrieb dieses anderen Motors zu steuern, wobei dieses Steuermittel dafür vorgesehen ist, diesen Spiegel zwischen einem vorbestimmten Winkel, mit einem dieser bestimmten Schwenkwinkel und einem maximalen Winkel, welcher über diesen einen dieser bestimmten Schwenkwinkel hinausgeht, zu schwenken.

4. Elektrisch fernbedienbarer Rückspiegel gemäß Anspruch 3, wobei diese Steuereinrichtung weiterhin eine Steuerschaltung (21) aufweist, welche in Reaktion auf die Gleitentfernung dieser Antriebswelle tätig wird, um diesen anderen Motor zu stoppen.

5. Elektrisch fernbedienbarer Rückspiegel gemäß Anspruch 1, wobei dieser eine Kolben (56) diesen Spiegelkörper vertikal kippt.

## Revendications

1. Un rétroviseur de type à commande à distance électrique comprenant :
un rétroviseur (4) ;
un corps de rétroviseur (3) supportant ce rétroviseur ;
un carter (1) ayant un joint à rotule qui supporte ce rétroviseur de façon pivotante ; et
une paire de plongeurs (5a, 5b) couplés au corps de rétroviseur et disposé dans le carter de façon à avancer et reculer sous l'action d'une paire de moteurs (10a), 10b), respectivement, via des trains de réducteurs (11a, 11b), respectivement, pour incliner le corps de rétroviseur horizontalement, et verticalement selon certains angles de pivotement,
**caractérisé en ce que :**
au moins un de ces plongeurs est de forme tubulaire et a un filetage femelle (5b1) formé sur sa circonférence intérieure,
au moins un cylindre de commande (17) est disposé concentriquement à l'un de ces plongeurs et est adapté pour ne pas pouvoir pivoter mais pour pouvoir coulisser par rapport à l'un de ces plongeurs, et adapté pour être mis en rotation par l'un des deux moteurs via un de ces trains de réducteurs,
au moins un arbre de commande (12) est disposé concentriquement à l'un de ces plongeurs et porte un filetage mâle (12b) qui s'engrène avec le filetage femelle de l'un de ces plongeurs,
au moins un cylindre à crémaillère (18) est disposé concentriquement à l'un de ces plongeurs et a une crémaillère (18a) formée sur une de ses surfaces extérieures, est adapté pour ne pas pouvoir pivoter par rapport à l'un des arbres de commande et reçoit un frottement axial contre le glissement axial,
un autre train de réducteurs (18a, 19) est installé et comprend un pignon (19) qui s'engrène avec la crémaillère, et
au moins un autre moteur (10c) qui entraîne l'autre train de réducteurs est installé, et permet de faire coulisser l'arbre de commande axialement via l'autre moteur pour incliner rapidement le corps de rétroviseur au-delà de l'un des angles de pivotement afin d'obserber une roue arrière d'une voiture.

2. Un rétroviseur de type à commande à distance électrique comme décrit dans la revendication 1, dans lequel un des arbres de commande et un des cylindres à crémaillère sont couplés entre eux par un embrayage à friction.

3. Un rétroviseur de type à commande à distance comme décrit dans la revendication 1, comprenant également un moyen (21) de commander la rotation de l'autre moteur, ce moyen de commande étant adapté pour incliner le rétroviseur entre un angle prédéterminé compris dans certains angles de pivotement et un angle maximum au-delà de l'un de ces angles de pivotement.

4. Un rétroviseur de type à commande à distance électrique comme décrit dans la revendication 3, dans lequel le moyen de commande comprend un circuit de commande (21) qui réagit à la distance de coulissement de l'arbre de commande pour empêcher cet autre moteur de tourner.

5. Un rétroviseur de type à commande à distance électrique comme décrit dans la revendication 1, dans lequels un des plongeurs (56) incline verticalement le corps de rétroviseur.
